# EUROPEAN PATENT APPLICATION

(11) **EP 3 952 258 A1**
(43) Date of publication of application: **09.02.2022**
(21) Application number: 19922685.3
(22) Date of filing: 25.12.2019
(51) Int. Cl.: H04M 1/00, H04M 1/73, G08G 1/00, G08G 1/09, H04W 4/40, H04W 4/80, H04W 52/02, H04W 84/10

(54) **INFORMATION COLLECTION TERMINAL DEVICE**

(30) Priority: 29.03.2019 JP 2019067323
(71) Applicant: Denso Corporation, Kariya-city, Aichi-Pref. 448-8661 (JP)
(72) Inventor: ARAKI Teruaki, Kariya-city, Aichi-pref. 448-8661 (JP)
(74) Representative: Winter, Brandl - Partnerschaft mbB
(86) International application number: PCT/JP2019/050748
(87) International publication number: WO 2020/202675

(57) **Abstract**

The information collection terminal device (100) is mounted on a mobile body and communicates with the base station device (200) by a low power consumption wide area wireless communication (LPWA) method. The information collection terminal device includes: a data collection unit (101 to 106) that collects data; a transmitter (108) that transmits the data to the base station device; a receiver (109) that receives the information about the reservation period, which is the period for which the mobile body is scheduled to be used, from the base station device; and a short-range wireless communication unit (110) that scans the mobile terminal device using a short-range wireless communication method and held by an user who uses the mobile body, and connects to the mobile terminal device during the reservation period.

## Description

### CROSS REFERENCE TO RELATED APPLICATION

This application is based on Japanese Patent Application No. 2019-067323 filed on March 29, 2019, the description of which is incorporated herein by reference.

### TECHNICAL FIELD

This application relates to an information collection terminal device that transmits data collected using a low power wide area wireless communication (LPWA) method, and particularly to a device mounted on a mobile body such as a vehicle.

### BACKGROUND ART

In recent years, utilization form borders of conventional smartphones or mobile phones are transcended, all things are connected to a network, and exchange information. As the result, IoT (Internet of Things) era has arrived, and generated a new additional value. Many of these things are located out of reach, and have characteristics that needs only a small amount of data for a long period. In response to this request, specifications of eMTC (enhanced Machine Type Communication) advocated by 3GPP (Third Generation Partnership Project), NB-IoT (Narrow Band Internet of Things) optimized for a smaller amount of data communication, SIGFOX (registered trademark) developed by Sigfox company, LoRa (registered trademark) developed by Semitech company, and the like are established.

On the other hand, regarding a device for collecting vehicle operation data mounted on a vehicle, a technique for suppressing consumption of an in-vehicle battery is disclosed (Patent Literature 1).

In addition, regarding in-vehicle devices that have a communication function, when they are in a standby state waiting for use by a user, power is not supplied to unnecessary circuits, and the power consumption of the in-vehicle device is minimized. Such a technique is provided (Patent Literature 2).

### PRIOR ART LITERATURES

### PATENT LITERATURE

[Patent Literature 1] JP 2003-346288 A
[Patent Literature 2] JP 2006-155347 A

### SUMMARY OF INVENTION

The communication device using the LPWA method reduces the amount of data and the communication frequency as much as possible in order to minimize the power consumption. For example, in a base station device, a radio wave transmission total time limit is provided, and it is not possible to transmit a response (e.g., ACK) or information to a communication terminal device unlimitedly. In this way, it can be said that the demand for power consumption reduction is at an extremely high level compared to the past.

An object of the present disclosure is to reduce power consumption in an information collection terminal device mounted on a mobile body and using an LPWA method.

The information collection terminal device according to one aspect of the present disclosure is an information collection terminal device mounted on a mobile body and communicating with a base station device by a low power consumption wide area (LPWA) wireless communication method, and including: a data collection unit for collecting data; a transmitter that transmits the data to the base station device; a receiver that receives a reservation period from the base station device, which is a period during which the mobile body is scheduled to be used; and a short-range wireless communication unit that scans a mobile terminal device using a short-range wireless communication method held by a user who uses a mobile body and connects to the mobile terminal device.

The information collection method according to another aspect of the present disclosure is an information collection method performed by an information collection terminal device mounted on a mobile body and communicating with a base station device by a low power consumption wide area (LPWA) wireless communication method, and including: collecting data; transmitting a response request message for requesting the base station device to transmit a reservation period, which is a period in which the mobile body is scheduled to be used, together with the data; receiving the response message including the reservation period transmitted from the base station device in response to the transmission of the data; scanning the mobile terminal device using the short-range wireless communication method held by the user using the mobile body during the reservation period; and connecting to the mobile terminal device.

The information collection program according to another aspect of the present disclosure is an information collection program performed by an information collection terminal device mounted on a mobile body and communicating with a base station device by a low power consumption wide area (LPWA) wireless communication method, and including: collecting data; transmitting a response request message for requesting the base station device to transmit a reservation period, which is a period in which the mobile body is scheduled to be used, together with the data; receiving the response message including the reservation period transmitted from the base station device in response to the transmission of the data; scanning the mobile terminal device using the short-range wireless communication method held by the user using the mobile body during the reservation period; and connecting to the mobile terminal device.

### EFFECTS OF INVENTION

According to the information collection terminal device, the information collection method, and the information collection program of the present disclosure, the mobile terminal device held by the user of the mobile body is scanned during the reservation period, which is the period in which the mobile body is scheduled to be used. By connecting to the terminal device, it is possible to reduce power consumption during the period when the mobile body is not used.

### BRIEF DESCRIPTION OF DRAWINGS

FIG. 1 is an explanatory diagram illustrating an outline of the device used in the embodiment;
FIG. 2 is a block diagram illustrating a configuration of an information collection terminal device according to an embodiment;
FIG. 3 is a state transition diagram of a power consumption mode of the information collection terminal device according to the embodiment;
FIG. 4 is a format of data transmitted and received by the information collection terminal device according to the embodiment;
FIG. 5 is a flowchart illustrating an operation of the information collection terminal device according to the embodiment; and
FIG. 6 is a flowchart illustrating the operation of the information collection terminal device according to the embodiment.

### EMBODIMENTS FOR CARRYING OUT INVENTION

The following will describe embodiments of the present disclosure with reference to the drawings.

The present invention referred hereinafter indicates the invention described in the claims, and is not limited to the following embodiments. Further, at least words within the double quotation mean words and phrases described in claims, and are not limited to the following embodiments.

Configurations and methods described in dependent claims of claims, configurations and methods of the following embodiment corresponding to the configurations and the methods described in the dependent claims, and the configurations and the methods described only in the following embodiment without descriptions in claims should be interpreted as arbitrary configurations and arbitrary methods in this invention. In a case that the scope of claims is broader than descriptions of the embodiments, configurations and methods described in the following embodiments only show examples of configurations and methods of the present disclosure, which should be interpreted as arbitrary configurations and arbitrary methods in the present invention. In any cases, essential configurations and methods of the present invention should be interpreted based on independent claims.

Any effects described in embodiments are effects obtained by a configuration of an embodiment as an example of this disclosure, and are not necessarily effects of this disclosure.

When there are multiple embodiments, a configuration disclosed in each embodiment is not limited to each embodiment, but can be combined across embodiments. For example, a configuration disclosed in one embodiment may be combined with other embodiments. Configurations disclosed the respective multiple embodiments may be collected and combined.

Findings or difficulties described in this disclosure are not publicly known, but the inventor has independently found out them. The findings or difficulties are facts that affirm the inventive step of the invention together with the configuration and method of the present disclosure.

### (Embodiment)

### 1. Outline of usage mode of the device assumed by this embodiment

In the present embodiment, as a mobile body, a vehicle used for rental or car sharing, a truck, a dump truck, or a commercial vehicle used by a business operator for business is assumed. Since these automobiles are used by an unspecified large number of people or a specified large number of people, it is necessary to make a reservation for the period of usage so that the periods of usage do not overlap. In the present embodiment, the usage period determined by the reservation is referred to as a reservation period.

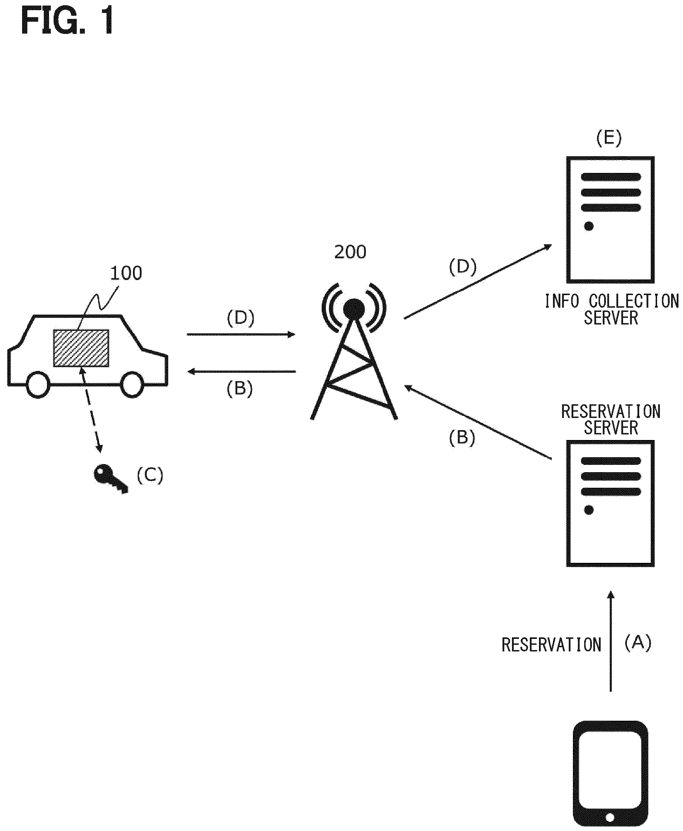

The outline of the usage mode of the device assumed by this embodiment will be described with reference to FIG. 1.
(A) A user who intends to use a vehicle makes a car reservation to a reservation server using a smartphone or a personal computer PC. At the time of reservation, the user inputs the desired reservation period, for example, the usage start date and time and the usage end date and time, or the usage start date and time and the usage period.
(B) The reservation period input to the reservation server is transmitted to the information collection terminal device 100 mounted on the vehicle by the LPWA method via the base station device 200. Since the LPWA method used in the present embodiment provides the communication with the uplink communication as a starting point, the response message (e.g., ACK) with respect to the data transmitted from the information collection terminal device 100 includes the reservation period.
(C) The information collection terminal device 100 recognizes a mobile terminal device such as a mobile phone, a smartphone or a key of an vehicle held by a user using a short-range wireless communication method, and connects to the mobile terminal device.
(D) The information collection terminal device 100 transmits data such as position information to the base station device 200 periodically or irregularly using the LPWA method. In addition to the data, a response request message for requesting the transmission of the reservation period is also transmitted.
(E) The data transmitted in (D) is transmitted and stored in the information collection server via the backbone network, and is used for analysis.
   For example, various data such as the moving situation of a vehicle, the driving situation such as sudden braking and sudden turning, the traffic accident situation when an accident occurs, the temperature and humidity change of the freezer of the truck bed, and the like are analyzed according to the application and purpose.

The information collection terminal device 100 of the present embodiment connects to the mobile terminal device held by the user during the reservation period at (C). Further, based on the reservation period and the presence / absence of connection with the mobile information terminal, the uplink communication at (D) and the downlink communication at (B) are executed while suppressing the power consumption.

The above description is an outline of the present embodiment, and the present disclosure may not be limited to this example.

### 2. Information collection terminal device configuration

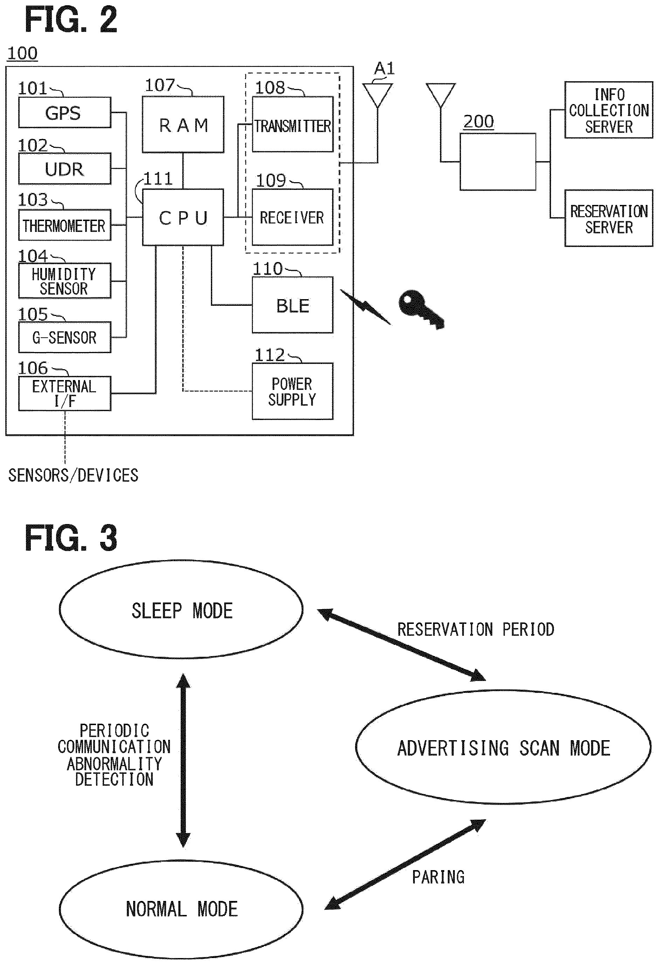

The configuration of the information collection terminal device 100 will be described with reference to FIG. 2.

In the following embodiments, an in-vehicle information collection terminal device mainly mounted on an automobile will be described as an example. However, the present disclosure includes an information collection terminal device other than the in-vehicle information collection terminal device unless the claims are limited.

The information collection terminal device 100 is mounted on a "mobile body" such as a vehicle, and communicates with the base station device 200 by a "low power consumption wide area wireless communication (LPWA) method". The information collection terminal device 100 communicates using an LPWA method, for example, SIGFOX (registered trademark) developed by Sigfox or LoRa (registered trademark) developed by Semtech. These communication methods have a characteristic that starts from an uplink communication as a starting point from the information collection terminal device to the base station device. The information collection terminal device 100 may be referred to as an in-vehicle communication device, an in-vehicle communication apparatus,
an operation management system, an in-vehicle monitoring device, or a drive recorder.

The "mobile object" refers to a movable object, and a travel speed may be arbitrary. Naturally, this also includes a case where the mobile object is stopped. Examples of the mobile object include, but are not limited to, automobiles, motorcycles, bicycles, pedestrians, ships, aircrafts, and objects mounted thereon.

The "low power wide area (LPWA) wireless communication method" of the present disclosure is a general term for wireless communication systems having low power consumption and a communication distance similar to that of a mobile phone, and the systems may not be limited.

The base station device 200 is connected to the network via the gateway, and is further connected to the information collection server and the reservation server via the network. The base station device 200 transmits information about the reservation period, received from the reservation server, to the information collection terminal device 100. Further, the base station device 200 transmits the data received from the information collection terminal device 100 to the information collection server via the network. The information collection server accumulates and utilizes the data collected by the information collection terminal device 100.

The information collection terminal device 100 includes a global positioning system (hereinafter, GPS) 101, an untethered dead reckoning device (hereinafter, UDR) 102, a thermometer 103, a humidity sensor 104, an acceleration sensor (hereinafter, G sensor) 105, and an external interface (hereinafter, external I / F) 106, RAM 107, a transmitter 108, a receiver 109, a Bluetooth low energy unit (hereinafter, BLE) 110, a CPU 111, a power supply 112, and an antenna A1.

The GPS 101 receives a signal from the satellite and collects position information indicating the current position of the vehicle. The position information includes, for example, latitude information and longitude information.

The UDR 102 collects vehicle position information and speed information using untethered dead reckoning navigation. The UDR 102 is equipped with a gyro sensor and a G sensor, and by integrating the acceleration / deceleration and turning angular velocity behavior of the mounted vehicle on the time axis, even if information cannot be obtained with GPS101, the movement distance and the direction of travel can be estimated.

The thermometer 103 and the humidity sensor 104 are installed in, for example, the passenger compartment or the luggage compartment of the vehicle, and measure and collect the temperature and humidity in the passenger compartment or the luggage compartment, respectively.

The G sensor 105 measures acceleration in at least one of the front-rear, left-right, and up-down directions of the vehicle. By using the measurement result of the G sensor 105, it is possible to detect acceleration / deceleration and inclination of the vehicle, vibration of the vehicle, and impact on the vehicle.

In this embodiment, the GPS 101, the UDR 102, the thermometer 103, the humidity sensor 104, and the G sensor 105 are examples of the "data collecting unit". Here, other sensors and devices may be used depending on the data to be collected.

Further, in the present embodiment, the GPS 101, the UDR 102, and the G sensor 105 correspond to the "movement detection unit" because they are sensors or devices that "detect the movement" of the vehicle. In this way, the "data collection unit" focuses on the data to be collected, while the "movement detection unit" focuses on the function of detecting movement, so that one sensor or device may be used and correspond to both a "data collection unit" and a "movement detection unit".

Here, "detecting movement" includes not only the case of directly detecting the fact of movement by measuring the position information, but also the case of indirectly detecting the fact of movement such as speed and acceleration.

The external I / F 106 receives data from a sensor or a device provided outside the information collection terminal device 100, or receives data from another communication terminal device or the like.

In the present embodiment, an example in which the GPS 101, the UDR 102, the thermometer 103, the humidity sensor 104, and the G sensor 105 are provided inside the information collection terminal device 100 will be described, alternatively, these devices and sensors may be disposed outside of the information collection terminal device 100 by connecting to the external I / F 106.

Further, the external I / F 106 corresponds to a "data collection unit" or / and a "movement detection unit" depending on the sensor or the device or the apparatus to be connected and the type of data received from these.

Further, it may be connected to a sensor or the like provided in the vehicle via the external I / F 106. For example, it may be a sensor mounted on the vehicle and connected to an electronic control device for a drive system that controls an engine, a steering wheel, a brake, and the like, an electronic control device for a vehicle body that controls a meter, a power window, and the like, or an electronic control device for safety to control for preventing a collision with an obstacle or a pedestrian.

Here, when it is not connected to a sensor or the like provided in a vehicle, installation work by a specialized business operator becomes unnecessary. Therefore, the information collection terminal device 100 is provided by a battery-powered device that is mounted on a dashboard, for example.

The RAM 107 stores data and detection results, collected by the GPS 101, the UDR 102, the thermometer 103, the humidity sensor 104, the G sensor 105, and sensors and devices connected to the external I / F 106, via the CPU 111.

Although it is assumed that the RAM 107 is a random access memory, the RAM 107 may be a hard disk (HDD), a flash memory, or the like. In this case, when the power source is turned off, data is not deleted, and can be stored.

The transmitter 108 uses the LPWA method to transmit the data, as a transmission target read from the RAM 107 via the CPU 111, from the antenna A1 to the base station device 200. In the present embodiment, in addition to the transmission target data, a response request message is also transmitted to the base station device 200. For example, a response request message for requesting the base station device 200 to transmit the information about the reservation period "together" with the data as the transmission target is transmitted, or a response request message for requesting an instruction to the base station device 200 "together" with the abnormality notification is transmitted. These details will be described later.

The communication from the information collection terminal device 100 to the base station device 200 is referred to as uplink communication (UL shown in the drawing).

Here, "together" includes not only the case where they are simultaneous but also the case where they are adjacent in time.

The transmitter 108 can change the data transmission interval outside the reservation period and during the reservation period.

Further, the transmitter 108 can change the data to be transmitted and the response request message between outside the reservation period and during the reservation period, or can change whether or not to request the response message from the base station device 200.

The receiver 109 receives data and a response message from the base station device 200 by using the LPWA method. In the present embodiment, for example, the response message transmitted from the base station device 200 including the reservation period is received. Alternatively, the response message transmitted from the base station device 200 including the instruction is received. These details will be described later.

The communication from the base station device 200 to the information collection terminal device 100 is defined as a downlink communication (DL shown in the figure).

The BLE (Bluetooth Low Energy) 110 (corresponding to "short-range wireless communication unit") provides Bluetooth (registered trademark) having a low power consumption communication mode, and communicates by "short-range wireless communication method". In the present embodiment, communication is performed with a mobile terminal device held by a user who uses a vehicle, for example, a mobile phone, a smartphone, or a key of a car. Specifically, the BLE 110 provides the central device (also called the master), the mobile terminal device provides the peripheral device (also called the slave), and the BLE 110 "scans" the mobile terminal device, in which an advertising scan is performed, and "connects" with the mobile terminal device, here pairing is done.

Here, the "short-range communication method" refers to a wireless communication method that covers a reach distance of about 20 meters or less, and includes, for example, ZigBee (registered trademark), Bluetooth (registered trademark), FeliCa (registered trademark), NFC (Near Field Communication), RFID, and the like.

Further, "scanning" refers to an operation of recognizing the existence of a mobile terminal device, and the method may not be limited.

Further, the "connection" may be linked to the extent that communication is possible, and it is not necessary to actually send and receive data.

The CPU 111 controls the GPS 101, the UDR 102, the thermometer 103, the humidity sensor 104, the G sensor 105, the external I / F 106, the RAM 107, the transmitter 108, the receiver 109, and the BLE 110 connected by an internal bus. In particular, the data received by the receiver 109 is analyzed, and the type and transmission method of the data or the like to be transmitted from the transmitter 108 are determined. That is, the functions of the "transmitter" and the "receiver" are realized by the transmitter 108 and the CPU 111, and the receiver 109 and the CPU 111.

Further, the CPU 111 realizes a "mode switching unit" that switches the power consumption mode based on the reservation period and the presence / absence of connection between the BLE 110 and the mobile terminal device.

The power supply 112 supplies electric power to each part of the information collection terminal device 100. Electric power may be supplied from, for example, an in-vehicle battery via a cigar socket, or a primary battery or a secondary battery may be used. By using the battery, the information collection terminal device 100 can be mounted on the dashboard of the vehicle without a cable or the like for power source supply, and installation work becomes easy.

### 3. Power consumption mode

The power consumption mode that can be adopted by the information collection terminal device 100 of the present embodiment will be described with reference to FIG. 3.

In the standby state in which the information collection terminal device 100 does not transmit / receive data, the sleep mode is set. In the sleep mode, electric power is supplied only to the timer and the parts for detecting the interrupt in order to shift to the advertising scan mode and the normal mode described below by the timer and the interrupt from the outside, and the electric power is not supplied to high-power parts such as the GPS101, the UDR102, the CPU111, and the like, or the frequency of the clock supplied to these parts is lowered.

When the start time of the reservation period arrives, the sleep state shifts to the advertising scan mode. The advertising scan mode is a mode in which the BLE 110 receives the advertising transmitted from the mobile terminal device. In the advertising scan mode, the power is supplied only to the BLE 110 and the parts required for the advertising scan. The arrival of the start time of the reservation period is detected by a timer (not shown), alternatively, it may be detected by an interrupt from the outside.

When the BLE 110 performs the pairing with the mobile terminal device in the advertising scan mode and the pairing is completed, the mode shifts to the normal mode. The normal mode is a mode in which power is supplied to a sensor or device such as the GPS101 for data collection, and the collected data is transmitted in a timely manner. Even in normal mode, it may be desirable to limit the power supply to unused parts.

In addition, when the periodic communication time arrives or various abnormalities occur, the mode shifts from the sleep mode to the normal mode. The arrival of the periodic communication time is detected by a timer (not shown). In addition, the occurrence of various abnormalities is detected by an interrupt due to an abnormal signal.

On the contrary, when the pairing is completed, the mode shifts from the normal mode to the advertising scan mode. In addition, when the periodic communication ends or the processing due to the occurrence of an abnormality ends, the mode shifts from the normal mode to the sleep mode. Furthermore, when the end time of the reservation period arrives, the advertising scan mode shifts to the sleep mode.

### 4. Data format

### (1) Uplink communication

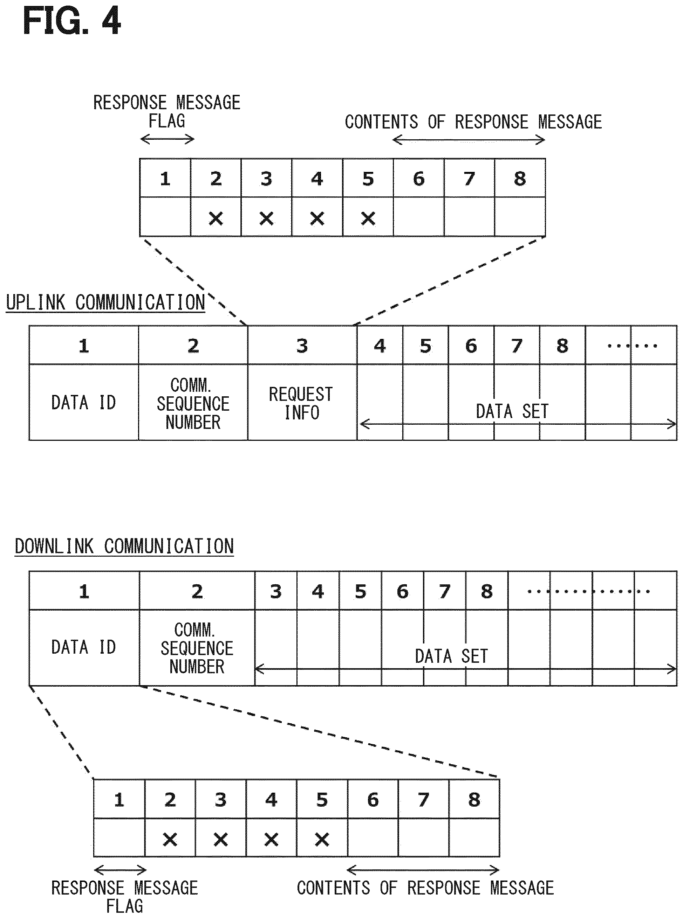

The format of the frame to be transmitted from the transmitter 108 will be described with reference to FIG. 4.

The format of the frame to be transmitted from the transmitter 108 to the base station device 200 includes a data ID, a communication sequence number, request information, and a data set. In addition, other data and signals may be included.

The data ID is an identifier that specifies the type of data to be transmitted. When transmitting a plurality of types of data, it may be used as an identifier that identifies a data set in which the types and order of data are defined.

The communication sequence number indicates the transmission order of the dataset to be transmitted during a defined period of time, for example, between 0:00 and 24:00 of the day.

The request information includes a response message necessity flag and a response message content.

The response message necessity flag is a flag that requests the base station device 200 to transmit a response message for notifying that the data transmitted from the information collection terminal device 100 has been received. For example, as shown in FIG. 4, the upper 1 bit of the 3rd byte can be set to 1 when a response message is requested, and 0 when no response message is requested.

The response message content is an identifier that specifies the content of the data to be included in the response message, and can be represented by the lower 3 bits as shown in FIG. 4, for example. For example, it is conceivable to set the following identifier.
Reservation period: 100b
Control content when vehicle movement is detected: 101b
Data transmission interval after change of periodic uplink communication: 110b
Frequency after change of advertising scan performed by the BLE110: 111b

### (2) Downlink communication

The format of the frame transmitted from the base station device 200 and received by the receiver 109 includes a data ID, a communication sequence number, and a data set. In addition, other data and signals may be included.

The data ID is an identifier that identifies the type of data included in the downlink communication. In the case of the present embodiment, it includes a response message flag and a response message content, and corresponds to request information in uplink communication.

The response message flag can be set to 1, for example, when the downlink communication is a response message, and 0 when the downlink communication is not a response message but is the frame to be spontaneously transmitted by the base station device 200.

The response message content is an identifier that identifies the content of the data included in the data set, and in the present embodiment, an identifier corresponding to the content of the uplink communication response message is used.

The communication sequence number indicates the transmission order of the data set transmitted from the base station device 200.

### 5. Operation of information collection terminal device

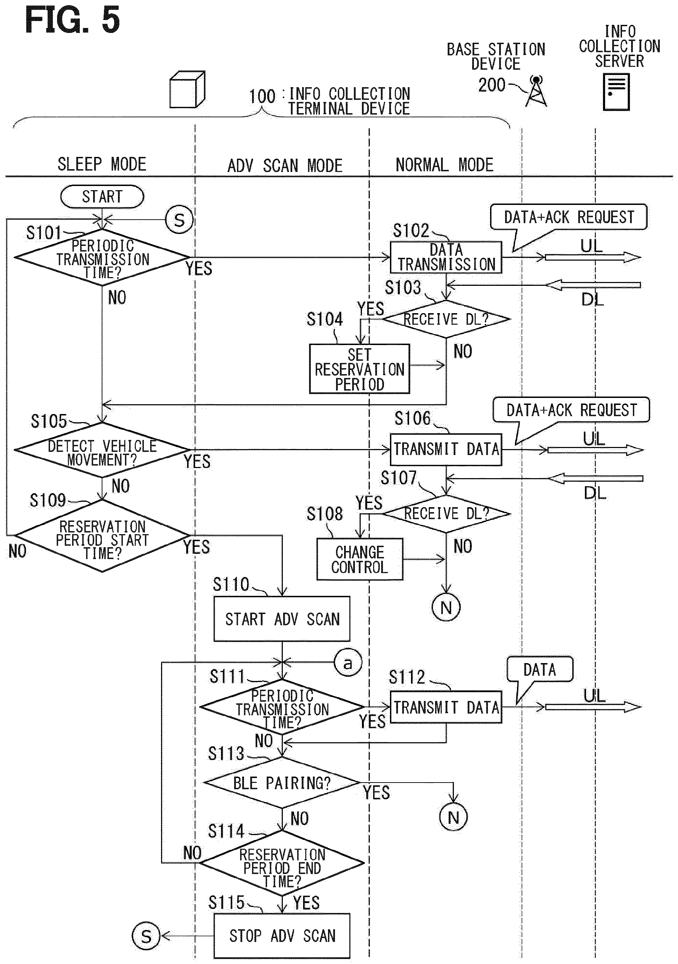

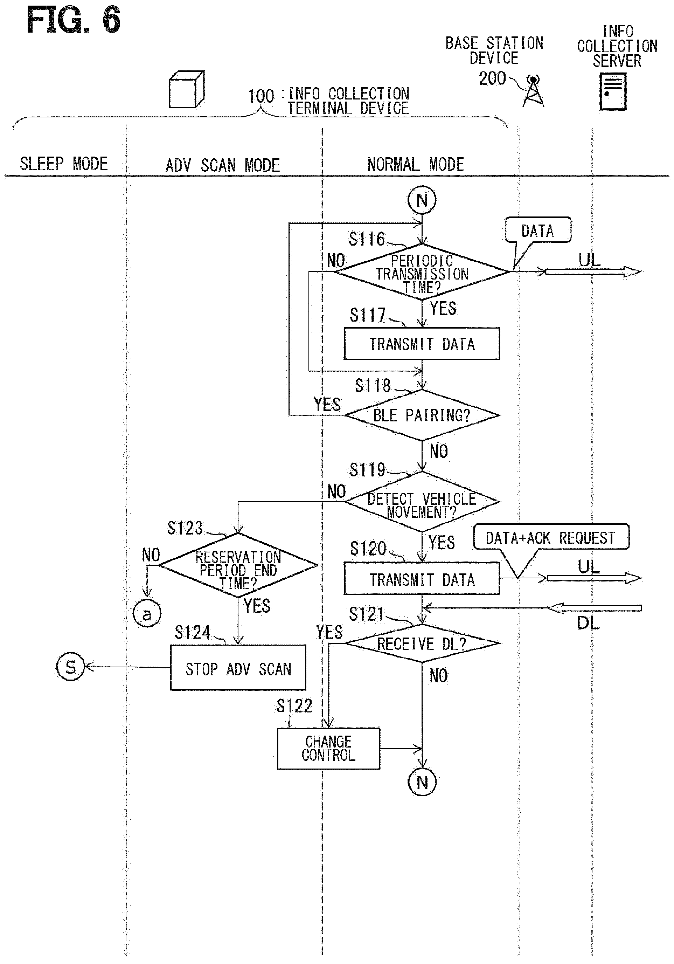

The operation of the information collecting terminal device 100 of the present embodiment will be described with reference to FIGS. 5 and 6. FIG. 5 shows the flow before the start of pairing by the BLE 110, and FIG. 6 shows the flow after the start of the pairing by the BLE 110.

First, it will be described with reference to FIG. 5.

When the periodic transmission time arrives ("YES" at S101), the information collection terminal device 100 in the sleep mode shifts to the normal mode and transmits the collected data from the transmitter 108 to the base station device 200 (at S102). The periodic transmission period can be arbitrarily set. For example, since the vehicle has not been used yet and has stopped at this point, it is set to transmit at a relatively long transmission interval, for example, every one hour. Further, the transmission interval may be different depending on the time zone. For example, the transmission interval may be longer at night than during the day.

In the frame transmitted from the transmitter 108, as shown in FIG. 4, the response message necessity flag is set to 1, and the reservation period 100b is specified as the response message content. In this way, when a new reservation period is set in the reservation server, or when the reservation period stored in the reservation server is changed, it is possible to receive the signal in which the reservation period is included in the response message to be transmitted from the base station device 200. Thus, it is not necessary to activate the information collection terminal device 100 to receive information except at the periodic transmission time, and it is possible to lengthen the time period that the information collection terminal device 100 is in the sleep mode.

The receiver 109 receives the response message from the base station device 200 ("YES" at S103). The CPU 111 sets or resets the reservation period included in the received response message (at S104). When the setting or resetting is completed, the mode is shifted to the sleep mode.

The response message may not be sent from the base station device 200 unless the reservation period is newly set or the reservation period is changed or canceled.

On the contrary, when the receiver 109 does not receive the response message, it may be determined that the communication is interrupted and the retransmission request may be transmitted. The cause of the communication interruption is that the data transmitted to the base station device 200 has not arrived due to the interruption of uplink communication, or that the data transmitted from the base station device 200 has not reached the information collection terminal device 100 due to the interruption of downlink communication.

The UDR 102 or the G sensor 105 detects whether or not the vehicle has moved (at S105), and when it detects that the vehicle has moved, the UDR 102 or the G sensor 105 shifts to the normal mode and transmits information indicating that the vehicle has moved (at S106).

In the frame to be transmitted from the transmitter 108, as shown in FIG. 4, the response message necessity flag is set to 1, and the control content 101b at the time of vehicle movement detection is specified as the response message content. In this way, it is possible to notify the fact that the vehicle has moved even though it is out of the reservation period and has not been paired with the user's mobile terminal device, and it is possible to receive an instruction how to change the control content at that time.

The receiver 109 receives the response message from the base station device 200 ("YES" at S107). The CPU 111 changes the control content according to the control content included in the received response message (at S108). For example, it is possible to perform control such as shortening the periodic transmission interval and outputting a warning by voice or video.

After S108, processing is performed in the normal mode shown in FIG. 6, assuming that the vehicle has been used.

At the end of S108, the mobile termination device of the user is not yet connected. The BLE 110 may initiate an advertising scan to identify whether the movement of the vehicle is due to the user. Further, the BLE 110 may perform pairing with the user's mobile terminal device.

When it is not detected that the vehicle has moved ("NO" at S105), it is detected whether or not the start time of the reservation period has arrived (at S109). When the start time of the reservation period does not arrive, the sleep mode is continued ("NO" at S109), and when the start time of the reservation period arrives ("YES" at S109), the mode shifts to the advertising scan mode, and the BLE 110 starts the advertising scan (at S110).

By starting the advertising scan when the start time of the reservation period arrives, the advertising scan is performed only when the presence of the user can be expected, so that the power consumption can be reduced.

Instead of turning on the advertising scan in the advertising scan mode and turning off the advertising scan in the sleep mode, the advertising scan is executed with high frequency in the advertising scan mode, and the advertising scan is executed with low frequency in the sleep mode.

When the periodic transmission time arrives ("YES" at S111), the information collection terminal device 100 in the advertising scan mode shifts to the normal mode and transmits the collected data from the transmitter 108 to the base station device 200 (at S112). Even in this case, the periodic transmission period can be set arbitrarily.

In the frame transmitted from the transmitter 108, 0 is set in the response message necessity flag. This is because the start time of the reservation period has already arrived and there is no need to receive information regarding the change of reservation.

Here, 1 may be set in the response message necessity flag. This is because there is a possibility that the reservation period may be changed or canceled after the reservation period starts, and it is necessary to obtain this information. In this case, the data collected may be set to be transmitted at a shorter transmission interval than in the sleep mode, for example, every 5 minutes.

After transmission, the mode shifts to the advertising scan mode.

When the BLE 110 detects the mobile terminal device held by the user, the BLE 110 connects with the mobile terminal device, that is, performs pairing ("YES" at S113). After pairing, it shifts to the normal mode.

When pairing is not performed by the BLE 110 ("NO" at S113), it is detected whether or not the end time of the reservation period has arrived (at S114). When the end time of the reservation period has not arrived, the advertising scan mode is continued ("NO" at S114), and when the end time of the reservation period has arrived ("YES" at S114), the BLE 110 stops the advertising scan (at S115), and shifts the mode to the sleep mode.

By stopping the advertising scan when the end time of the reservation period arrives, the advertising scan is performed only when the presence of the user can be expected, so that the power consumption can be reduced.

After S113, it may be detected whether or not the vehicle has moved, as in S105. When the movement of the vehicle is detected, the same processing as in S106 to S108 is performed.

From here, it will be described with reference to FIG. 6.

When the periodic transmission time arrives ("YES" at S116), the information collection terminal device 100 in the normal mode transmits the collected data from the transmitter 108 to the base station device 200 (at S117). The periodic transmission period can be arbitrarily set. For example, since the vehicle is already in use at this point, it is set to transmit at a relatively short transmission interval, for example, every 15 minutes in order to check the usage status.

In the frame transmitted from the transmitter 108, 0 is set in the response message necessity flag. This is because the vehicle is already in use and there is no need to receive information about changes in reservations for this use. In addition, it is sufficient to obtain the reservation for the next user when the present use is completed.

When information other than the reservation period or an instruction from the base station device 200 is required, the response message request flag may be set to 1 and the response message content may be set. For example, a request for a control command from an information collection server or a reservation server connected to the base station device 200 may be included.

The BLE 110 detects whether or not the pairing is continued (at S118). When the pairing is continued, the normal mode is continued ("YES" at S118), and when the pairing is not continued ("NO" at S118), the UDR 102 or the G sensor 105 detects whether or not the vehicle has moved (at S119).

When it is detected that the vehicle has moved, the transmitter 108 transmits information indicating that the vehicle has moved (at S120).

In the frame to be transmitted from the transmitter 108, the response message necessity flag is set to 1, and the control content 101b at the time of vehicle movement detection is specified as the response message content. In this way, it is possible to notify the fact that the vehicle has moved even though it has not been paired with the user's mobile terminal device, and it is possible to receive an instruction how to change the control content at that time.

The receiver 109 receives the response message from the base station device 200 ("YES" at S121). The CPU 111 changes the control content according to the control content included in the received response message (at S122). For example, it is possible to perform control such as shortening the periodic transmission interval and outputting a warning by voice or video.

In this case, there is a high possibility that the connection with the BLE110 has been disconnected as a result of the battery of the user's mobile terminal device being exhausted. Thus, the process is performed in the normal mode assuming that the usage of the vehicle has been continued.

When it is not detected that the vehicle has moved ("NO" at S119), the mode shifts to the advertising scan mode, and it is detected whether or not the end time of the reservation period has arrived (at S123). When the end time of the reservation period has not arrived, it is highly possible that the user has left the vehicle temporarily, so the advertising scan mode is continued ("NO" at S123) in case the user returns. When the end time of the reservation period has arrived ("YES" at S123), it is highly possible that the user has finished using the car, so the advertising scan is stopped (at S124), and the mode shifts to the sleep mode.

In the flows of FIGS. 5 and 6, when a process or determination in the latter stage does not presuppose a process or determination in the first stage, the order can be changed.

Further, FIGS. 5 and 6 not only show the information collection method by the information collection terminal device 100, but also show the processing procedure of the information collection program executed by the information collection terminal device 100. The program is implemented as software in any protocol stack of communication protocols, and not necessarily at an application level. In a case of the application level, it may be possible to cover shortcomings of an upper layer while maintaining a communication protocol of the upper layer of a communication method.

As described above, according to the information collecting terminal device 100 of the present embodiment, when the collected data is transmitted to the base station device 200, a response request message for requesting transmission of the reservation period is transmitted, and the device 100 receives the response message including the reservation period from the base station device 200. Thus, it is not necessary to separately activate the information collection terminal device 100 for receiving the reservation period, and the power consumption can be reduced.

Further, since the response message is not requested during the reservation period and the response message is requested only outside the reservation period, the power consumption required for reception can be reduced.

In addition, since the processing content is changed based on the reservation period and the presence or absence of connection with the mobile terminal device, it is possible to realize the minimum necessary power consumption.

### (Ending statement)

The features of the information collection terminal device according to the embodiment of the present disclosure have been described above.

Terms used in the description of each embodiment are examples and may be replaced with synonymous terms or terms having a synonymous function.

The block diagram used in the description of each embodiment is a diagram in which the configurations of the information collection terminal device and the like are classified and organized corresponding to the functions. These functional blocks are realized by any combination of hardware and/or software. Further, since the functions are shown, the block diagram can be understood as disclosure of the method.

Order of functional blocks that can be grasped as processing, a sequence, and a method described in relation to each embodiment may be changed unless some restriction is imposed, for example, a result from one step is utilized at another step.

The terms of "first" and "second" used in the description of each embodiment and claims are for discriminating two or more configurations and methods of the same kind and do not limit order or superiority or inferiority.

In the embodiments described above, it is described that the information collection terminal device of the present disclosure is mounted on the vehicle, that is, the in-vehicle device is described. Alternatively, the present disclosure may be applied on the premise that the information collection terminal device of the present disclosure is possessed by the pedestrian.

Examples of the information collection terminal device include, as parts or semi-finished products, a semiconductor, an electronic circuit, a module, or an ECU (electronic control unit). Further, the examples include, as finished products, a drive recorder, a car navigation system, a smartphone, a personal computer, a mobile phone, and a mobile information terminal.

The present disclosure is implemented not only by dedicated hardware having a configuration and a function described in relation to each embodiment. The present disclosure can also be implemented as a combination of a program for implementing the present disclosure, recorded on such a recording medium as memory and a hard disk and general-purpose hardware including dedicated or general-purpose CPU, memory, or the like, capable of executing the program.

A program stored in a non-transitory tangible storage medium (for example, an external storage device (a hard disk, a USB memory, a CD/BD, or the like) of dedicated or general-purpose hardware, or an internal storage device (a RAM, a ROM, or the like)) may also be provided to dedicated or general-purpose hardware via the recording medium or from a server via a communication line without using the recording medium. As a result, it is possible to always provide a latest function by updating the program.

### INDUSTRIAL APPLICABILITY

The information collection terminal device according to the present disclosure can be applied not only to reservations for vehicles but also to reservations for the use of moving objects. For example, the present disclosure can be applied to mobile phones for rental.

## Claims

1. An information collection terminal device (100) that is mounted on a mobile body and communicates with a base station device (200) by a low power consumption wide area wireless communication (LPWA) method, the information collection terminal device comprising:
a data collection unit (101-106) that collects data;
a transmitter (108) that transmits the data to the base station device;
a receiver (109) that receives information about a reservation period, for which the mobile body is scheduled to be used, from the base station device; and
a short-range wireless communication unit (110) that scans the mobile terminal device using a short-range wireless communication method and held by an user who uses the mobile body, and connects to the mobile terminal device during the reservation period.

2. The information collection terminal device according to claim 1, wherein:
the transmitter transmits a response request message, for requesting the base station device to transmit the information about the reservation period, together with the data; and
the receiver receives a response message transmitted from the base station device and including the information about the reservation period in response to a transmission of the data.

3. The information collection terminal device according to claim 2, wherein:
the transmitter transmits the response request message for requesting a transmission of the information of the reservation period outside of the reservation period; and
the transmitter does not transmit the response request message for requesting the transmission of the information of the reservation period during the reservation period.

4. The information collection terminal device according to claim 1, further comprising:
a movement detector (101,102,105) for detecting a movement of the mobile body, wherein:
the transmitter transmits a response request message for requesting an instruction together with an abnormality notification to the base station device when it is outside of the reservation period and the movement detector detects the movement of the mobile body or when the short-range wireless communication unit is not connected to the mobile terminal device and the movement detection unit detects the movement of the mobile body; and
the receiver receives a response message transmitted from the base station device and including the instruction in response to a transmission of the abnormality notification.

5. The information collection terminal device according to claim 1, wherein:
the transmitter shortens a transmission interval of the data when the short-range wireless communication unit is connected to the mobile terminal device as compared with a case where the short-range wireless communication unit is not connected to the mobile terminal.

6. The information collection terminal device according to claim 1, further comprising:
a mode switching unit (111) that switches a power consumption mode based on the reservation period and presence or absence of connection with the mobile terminal device.

7. The information collection terminal device according to claim 1, wherein:
the mobile body is a vehicle; and
the reservation period is a period in which the vehicle is scheduled to be used.

8. An information collection method performed by an information collection terminal device (100) that is mounted on a mobile body and communicates with a base station device (200) using a low power consumption wide area wireless communication (LPWA) method, the information collection method comprising:
collecting data;
transmitting a response request message, for requesting the base station device to transmit information about a reservation period, for which the mobile body is scheduled to be used, together with the data (S102);
receiving a response message transmitted from the base station device and including the information about the reservation period in response to a transmission of the data (S103); and
scanning the mobile terminal device using a short-range wireless communication method and held by an user who uses the mobile body, and connecting to the mobile terminal device during the reservation period (S109, S110, S113).

9. An information collection program performed by an information collection terminal device (100) that is mounted on a mobile body and communicates with a base station device (200) using a low power consumption wide area wireless communication (LPWA) method, the information collection program comprising:
collecting data;
transmitting a response request message, for requesting the base station device to transmit information about a reservation period, for which the mobile body is scheduled to be used, together with the data (S102);
receiving a response message transmitted from the base station device and including the information about the reservation period in response to a transmission of the data (S103); and
scanning the mobile terminal device using a short-range wireless communication method and held by an user who uses the mobile body, and connecting to the mobile terminal device during the reservation period (S109, S110, S113).
